# EUROPEAN PATENT APPLICATION

(11) **EP 4 611 434 A1**
(43) Date of publication of application: **03.09.2025**
(21) Application number: 23883018.6
(22) Date of filing: 20.10.2023
(51) Int. Cl.: H04W 36/08, H04W 36/38, H04W 36/00

(54) **CELL CONTROL METHOD AND DEVICE THEREFOR**

(30) Priority: 24.10.2022 KR 20220137390; 19.10.2023 KR 20230140086
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/016413
(87) International publication number: WO 2024/090912

(57) **Abstract**

Provided are a device and a method of a distributed unit (DU) for performing an L1/L2 triggered mobility (LTM) operation. The method may include transmitting, to a terminal, an RRC reconfiguration message including LTM candidate cell configuration information, determining LTM execution for the UE, transmitting, to the UE, a MAC control element for an LTM cell switch; and transmitting, to a central unit (CU) for configuring the base station, information indicating LTM cell switch initiation or information indicating the success of the cell switch.

## Description

### Technical Field

The disclosure relates to a mobility control technology for a mobile communication terminal.

### Background Art

The spread of small wireless communication devices, such as smartphones, is leading to an increasing number of users. In particular, not only smartphones but also various modes of transportation, such as cars and airplanes, come equipped with wireless communication devices, making it possible to communicate while on the move.

When a wireless communication device moves, switching occurs from one cell coverage to another. The development of high-speed vehicles further increases the demand for cell switching.

This cell switching is called handover. Typically, a UE in the RRC connected state performs handover through RRC signaling. As such, when handover is performed based on L3 signaling, the handover procedure between the base station, core network entity, and UE is complicated, and takes a long time.

Meanwhile, beam level mobility based on the synchronization signal block (SSB) according to the beam forming technology introduced in NR is based on the SSB associated with the initial downlink bandwidth part (BWP). However, beam level mobility has a limitation in that it supports mobility only within the same cell.

Therefore, a need exists for a technology that enables cell switching more simply and in a shorter time when the UE frequently moves between cells.

### Detailed Description of the Invention

### Technical Problem

The disclosure provides a method and device for performing a mobility control operation of a UE quickly in a lower layer.

### Technical Solution

In an aspect, a method may be provided for performing an L1/L2 triggered mobility (LTM) operation by a distributed unit (DU) constituting a base station. The method may include transmitting an RRC reconfiguration message including LTM candidate cell configuration information to a UE, determining LTM execution for the UE, transmitting a MAC control element for an LTM cell switch to the UE, and transmitting information indicating initiation of the LTM cell switch or information indicating cell switch success to a central unit (CU) constituting the base station.

In another aspect, a method may be provided for performing an L1/L2 triggered mobility (LTM) operation by a UE, comprising receiving an RRC reconfiguration message including LTM candidate cell configuration information from a distributed unit (DU) constituting a base station, receiving a MAC control element for an LTM cell switch from the distributed unit, if receiving the MAC control element, controlling to notify that the LTM cell switch has been triggered from a MAC layer to an RRC layer, and transmitting, to the distributed unit, data for indicating successful completion for the LTM cell switch according to a result of performing the LTM cell switch operation.

In another aspect, a distributed unit (DU) constituting a base station may be provided for performing an L1/L2 triggered mobility (LTM) operation. The DU may include a transmitter transmitting an RRC reconfiguration message including LTM candidate cell configuration information to a UE, and a controller determining LTM execution for the UE, wherein the transmitter transmits a MAC control element for an LTM cell switch to the UE and transmits information indicating initiation of the LTM cell switch or information indicating cell switch success to a central unit (CU) constituting the base station.

In another aspect, a UE may be provided for performing an L1/L2 triggered mobility (LTM) operation. The UE may include a receiver receiving an RRC reconfiguration message including LTM candidate cell configuration information from a distributed unit (DU) constituting a base station and receiving a MAC control element for an LTM cell switch from the distributed unit, a controller, if receiving the MAC control element, controlling to notify that the LTM cell switch has been triggered from a MAC layer to an RRC layer, and a transmitter transmitting, to the distributed unit, data for indicating successful completion for the LTM cell switch according to a result of performing the LTM cell switch operation.

### Advantageous Effects

According to the present embodiments, the UE may perform a mobility control operation quickly at a lower layer.

### Brief Description of Drawings

FIG. 1 is a view schematically illustrating a structure for an NR wireless communication system.
FIG. 2 is a view illustrating a frame structure in an NR system.
FIG. 3 is a view illustrating a resource grid supported by radio access technology.
FIG. 4 is a view illustrating a bandwidth part supported by radio access technology.
FIG. 5 is a view exemplarily illustrating a synchronization signal block in radio access technology.
FIG. 6 is a view illustrating a random access procedure in radio access technology.
FIG. 7 is a view illustrating a CORESET.
FIG. 8 is a flowchart illustrating a distributed unit operation according to an embodiment.
FIG. 9 is a flowchart illustrating operations of a UE according to an embodiment.
FIG. 10 is a block diagram illustrating a configuration of a distributed unit according to another embodiment.
FIG. 11 is a block diagram illustrating a configuration of a UE according to another embodiment.

### Mode for Carrying out the Invention

Hereinafter, embodiments of the disclosure will be described in detail with reference to the accompanying drawings. In assigning reference numerals to components of each drawing, the same components may be assigned the same numerals even when they are shown on different drawings. When it is determined that the subject matter of the disclosure would render it unclear, the detailed description of the known art or functions may be skipped. The terms "comprises" and/or "comprising," "has" and/or "having," or "includes" and/or "including" when used in this specification are intended to specify the presence of stated features, regions, integers, steps, operations, elements, components and/or group thereof, but do not preclude the presence or addition of one or more other features, regions, integers, steps, operations, elements, components, and/or groups thereof. As used herein, the singular forms "a", "an" and "the" are intended to include the plural forms as well, unless the context explicitly indicates otherwise.

Such terms as "first," "second," "A," "B," "(a)," and "(b)," may be used in describing the components of the present invention. These terms are provided merely to distinguish one component from another, and the essence, order, or number of the components are not limited by these terms.

In describing the positional relationship between components, when two or more components are described as being "connected", "coupled" or "linked", the two or more components may be directly "connected", "coupled" or "linked" ", or an intermediate component may be present . In this context, the intermediate component may be included in one or more of the two or more components that are "connected", "coupled" or "linked" to each other.

When such terms as, "after", "next to", "before", and similar expressions, are used to describe the temporal flow relationship related to components, operation methods, and fabricating methods, they may include a non-continuous relationship unless the term "immediately" or "directly" is used.

When a component is designated by a value or its corresponding information (e.g., level), the value or the corresponding information may be interpreted as including a tolerance resulting from various factors (e.g., process factors, internal or external impacts, or noise).

In the disclosure, a 'wireless communication system' means a system that provides various communication services, such as voice and data packets, using a radio resource and may include a UE, a base station, or a core network.

The present embodiments disclosed below may be applied to wireless communication systems that utilize various radio access technologies. For example, the present embodiments may be applied to various radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Further, radio access technology may mean not only a specific access technology, but also a communication technology for each generation established by various communication organizations, such as 3GPP (3^{rd} generation partnership project), 3GPP2, Wi-Fi, Bluetooth, IEEE (institute of electrical and electronic engineers), and ITU (International telecommunication union). For example, CDMA may be implemented as radio technology, such as universal terrestrial radio access (UTRA) or CDMA2000. TDMA may be implemented as GSM (global system for mobile communications)/GPRS (general packet radio service)/EDGE (enhanced data rates for GSM evolution). OFDMA may be implemented with a wireless technology, such as institute of electrical and electronic engineers (IEEE) 802.11 (Wi-Fi), IEEE 802.16 (WiMAX), IEEE 802-20, evolved UTRA (E-UTRA), and the like. IEEE 802.16m is an evolution of IEEE 802.16e, and provides backward compatibility with IEEE 802.16e-based systems. UTRA is part of UMTS (universal mobile telecommunications system). 3GPP (3rd generation partnership project) LTE(long term evolution) is part of E-UMTS (evolved UMTS) using evolved-UMTS terrestrial radio access (E-UTRA) and adopts OFDMA for downlink and SC-FDMA for uplink. As such, the present embodiments may be applied to currently disclosed or commercialized radio access technologies and may also be applied to radio access technologies currently under development or to be developed in the future.

Meanwhile, in the disclosure, 'UE' is a comprehensive concept meaning a device including a wireless communication module that communicates with a base station in a wireless communication system and should be interpreted as a concept that may include not only user equipment (UE) in, e.g., WCDMA, LTE, NR, HSPA, and IMT-2020 (5G or new radio), but also a mobile station (MS), user terminal (UT), subscriber station (SS), or wireless device in GSM. Further, the UE may be a user portable device, such as a smartphone, according to the usage type and, in the V2X communication system, the UE may mean a vehicle or a device including a wireless communication module in the vehicle. Further, in the case of a machine type communication system, the UE may mean an machine type communication (MTC) terminal, machine-to-machine (M2M) terminal, or ultra reliable low latency communication (URLLC) terminal equipped with a communication module to perform machine type communication.

In the disclosure, 'base station' or 'cell' refers to a terminal that communicates with a UE in terms of a network and in concept encompasses various coverage areas, such as node-B, evolved node-B (eNB), gNode-B (gNB), low power node (LPN), sector, site, various types of antennas, base transceiver system (BTS), access point, point (e.g. transmission point, reception point, or transmission/reception point), relay node, mega cell, macro cell, micro cell, pico cell, femto cell, remote radio head (RRH), radio unit (RU), or small cell. Further, 'cell' may mean one including a bandwidth part (BWP) in the frequency domain. For example, 'serving cell' may mean the activation BWP of the UE.

Since there is a base station controlling one or more cells in the various cells enumerated above, the base station may be interpreted in two meanings. The base station may be 1) a device itself which provides a mega cell, a macro cell, a micro cell, a pico cell, a femto cell, or a small cell in relation to the radio region, or 2) the radio region itself. In 1), all devices that provide a predetermined radio region and are controlled by the same entity or interact to configure a radio region via cooperation are denoted as base stations. An embodiment of the base station is a transmission/reception point, transmission point, or reception point depending on the scheme of configuring the radio region. In 2), the radio region itself, in which a signal is received or transmitted from the point of view of the UE or a neighboring base station may be the base station.

In the disclosure, 'cell' may mean the coverage of the signal transmitted from the transmission/reception point, a component carrier having the coverage of the signal transmitted from the transmission/reception point (transmission point or transmission/reception point), or the transmission/reception point itself.

Uplink (UL) means a scheme for transmitting data from the UE to the vase station or for receiving data at the UE from the base station, and downlink (DL) means a scheme for transmitting data from the base station to the UE at the base station. Downlink may mean communication or a communication path from the multiple transmission/transmission points to the UE, and uplink may mean communication or communication path from the UE to multiple transmission/reception points. In this case, in the downlink, the transmitter may be part of the multiple transmission/reception points, and the receiver may be part of the UE. Further, in the uplink, the transmitter may be part of the UE, and the receiver may be part of the multiple transmission/reception points.

Uplink and downlink configure a control channel, such as physical downlink control channel (PDCCH) or physical uplink control channel (PUCCH) and transmits and receives control information through the control channel. Uplink and downlink configure a data channel, such as physical downlink shared channel (PDSCH) or physical uplink shared channel (PUSCH) transmit and receive data. Hereinafter, the context in which signals are transmitted or received through a channel, such as PUCCH, PUSCH, PDCCH, and PDSCH, is expressed as 'transmitting or receiving PUCCH, PUSCH, PDCCH, and PDSCH.'

Although the technical spirit is described with a primarily focus on the 3GPP LTE/LTE-A/new RAT (NR) communication system for clarity of description, the technical features are not limited to this communication system.

The 3GPP develops 5th-generation (5G) communication technology to meet the requirements of the ITU-R's next-generation radio access technology following its research on 4th-generation (4G) communication technology. Specifically, the 3GPP develops new NR communication technology separate from LTE-A pro and 4G communication technology, which have enhanced LTE-advanced technology to meet the requirements of ITU-R, as 5G communication technology. Both LTE-A pro and NR refer to 5G communication technologies. Hereinafter, 5G communication technology will be described focusing on NR unless specified as a specific communication technology.

Operating scenarios in NR define various operating scenarios by adding considerations for satellites, automobiles, and new verticals in the existing 4G LTE scenarios. From a service point of view, NR supports i) the enhanced mobile broadband (eMBB) scenario, ii) the massive machine communication (mMTC) scenario characterized by high UE density, wide deployment, low data rates, and asynchronous access, and iii) the ultra-reliability and low latency (URLLC) scenario, which requires high reliability and also supports high-speed mobility.

To meet such scenarios, NR introduces wireless communication systems that adopt new waveform and frame structure technologies, low-latency technologies, ultra-high frequency band (mmWave) support technologies, and forward compatibility providing technologies. In particular, the NR system suggests various technical changes in terms of flexibility to provide forward compatibility. The main technical features of NR will be described below with reference to the drawings.

### <Overview of NR system>

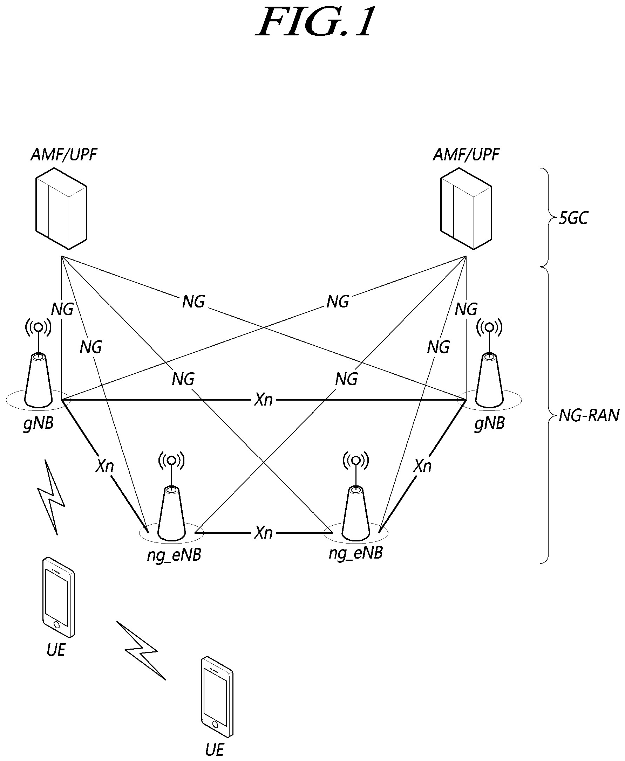

FIG. 1 is a view schematically illustrating a structure for an NR system.

Referring to FIG. 1, the NR system is divided into a 5G core network (5GC) and an NR-RAN part. The next generation radio access network (NG-RAN) includes gNB and ng-eNBs which provide user plane (SDAP/PDCP/RLC/MAC/PHY) and user equipment (UE) control plane (RRC) protocol termination. The gNBs or the gNBs and the ng-eNBs are interconnected through the Xn interface. The gNB and the ng-eNB are connected to the 5G core network (5GC) through the NG interface. The 5GC may include i) an access and mobility management function (AMF) which is in charge of the control plane including UE access and mobility control function, and ii) a user plane function (UPF), which handles the user data control function. NR supports both the below-6GHz frequency band (Frequency Range 1 (FR1) and the above-6GHz frequency band (Frequency Range 2 (FR2)).

The gNB means a base station that provides the UE with NR user plane and control plane protocol termination, and the ng-eNB means a base station that provides the UE with E-UTRA user plane and control plane protocol termination. In this disclosure, the base station should be understood as encompassing both gNB and ng-eNB and, when necessary, may be used to separately denote gNB or ng-eNB.

### <NR waveform, numerology, and frame structure>

NR uses the CP-OFDM waveform with a cyclic prefix for downlink transmission and either CP-OFDM or DFT-s-OFDM for uplink transmission. The OFDM technology is easily integrated with multiple input multiple output (MIMO) and offers advantages, such as high frequency efficiency and the ability to use a low-complexity receiver.

Meanwhile, since the above-described three scenarios in NR have different requirements for data rate, latency, and coverage, it is necessary to efficiently meet the requirements of each scenario through the frequency band constituting any NR system. To achieve this, technology has been proposed for efficiently multiplexing radio resources based on a plurality of different numerologies.

Specifically, the NR transmission numerology is determined based on subcarrier spacing and cyclic prefix (CP). As shown in Table 1 below, it changes exponentially with the exponent value of 2 used as µ relative to 15kHz.

**[Table 1]**

| µ | subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

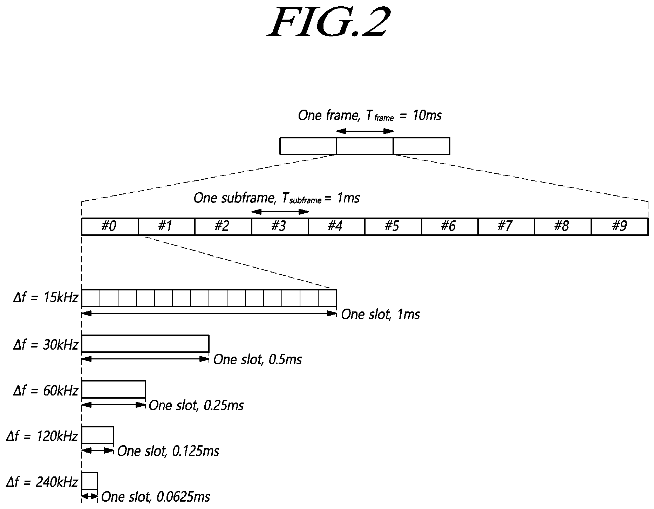

As shown in Table 1 above, the NR numerologies may be divided into five types depending on subcarrier spacing. This is different from the fixed subcarrier spacing of 15kHz in LTE, which is a 4G communication technology. Specifically, in NR, the subcarrier spacings used for data transmission are 15, 30, 60, and 120 kHz, and the subcarrier spacings used for synchronization signal transmission are 15, 30, 120, and 240 kHz. Further, the extended CP is applied only to the 60kHz subcarrier spacing. Meanwhile, as part of the frame structure in NR, a frame with a length of 10ms, constituted of 10 subframes of equal length (1ms each), is defined. Each frame may be divided into two half frames of 5 ms, and each half frame may include 5 subframes. For the15 kHz subcarrier spacing, one subframe is constituted of one slot, and each slot is constituted of 14 OFDM symbols. FIG. 2 is a view illustrating a frame structure in an NR system.

Referring to FIG. 2, a slot is fixedly composed of 14 OFDM symbols in the case of the normal CP, but the length of the slot in the time domain may vary depending on the subcarrier spacing. For example, for a numerology with a 15kHz subcarrier spacing, a slot has the same length as the subframe, as the length of 1ms. In contrast, for a numerology with a 30 kHz subcarrier spacing, a slot is constituted of 14 OFDM symbols, but two slots may be included in one subframe, as the length of 0.5ms. In other words, the subframe and the frame are defined as having a fixed length, and the slot is defined with the number of symbols, and the temporal length may vary depending on the subcarrier spacing.

Meanwhile, NR defines a slot as the basic unit for scheduling and, to reduce transmission latency in the radio section, adopts minislot (or also referred to as subslot or non-slot based schedule). When a wide subcarrier spacing is used, the length of one slot is inversely proportional to the subcarrier spacing, allowing for reduced transmission latency in the radio section. The minislot is for efficient support of the URLLC scenario and enables scheduling in the units of 2, 4, or 7 symbols.

Further, NR defines uplink and downlink resource allocation as the symbol level within one slot, unlike LTE. To reduce HARQ latency, a slot structure has been introduced that enables HARQ ACK/NACK to be transmitted directly within the transmission slot. This slot structure is referred to as a self-contained structure in the description.

NR is designed to support a total of 256 slots of which 62 slot formats are used in 3GPP Rel-15. Further, a common frame structure for FDD or TDD frame is supported through a combination of various slots. For example, NR supports i) a slot structure where all symbols in the slot are configured as downlink, ii) a slot structure where all symbols are configured as uplink, and iii) a slot structure where downlink symbols and uplink symbols are combined. Further, NR supports data transmission that is distributed across and scheduled in one or more slots. Accordingly, the base station may inform the UE whether a given slot is a downlink slot, uplink slot, or flexible slot using the slot format indicator (SFI). The base station may indicate the slot format by indicating (e.g., providing) the index of the table configured through UE-specific RRC signaling via the SFI and may indicate it dynamically through downlink control information (DCI) or statically or semi-statically through RRC.

### <NR physical resource>

In relation to the physical resource in NR, factors such as antenna port, resource grid, resource element, resource block, and bandwidth part are taken into consideration.

An antenna port is defined so that the channel carried by a symbol on an antenna port may be inferred from the channel carried by another symbol on the same antenna port. When the large-scale property of the channel carrying a symbol on one antenna port may be inferred from the channel carrying a symbol on a different antenna port, the two antenna ports may be considered to have a QC/QCL (quasi co-located or quasi co-location) relationship. Here, the large-scale properties include one or more of delay spread, Doppler spread, frequency shift, average received power, and received timing.

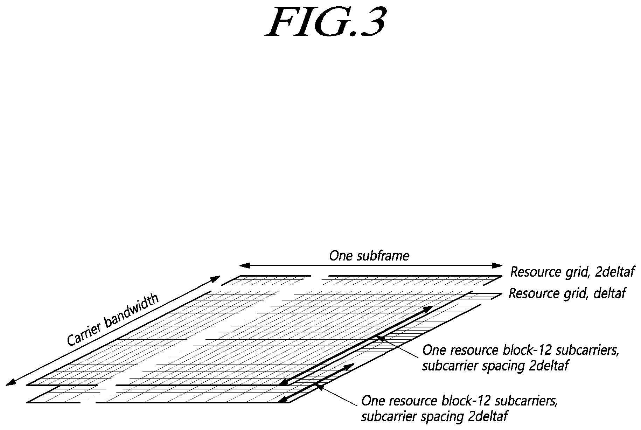

FIG. 3 is a view illustrating a resource grid supported by radio access technology.

Referring to FIG. 3, since NR supports a plurality of numerologies on the same carrier, a resource grid may be defined for each numerology. Furthermore, the resource grid may also vary depending on the antenna port, subcarrier spacing, or transmission direction.

The resource block is constituted of12 subcarriers and is defined only in the frequency domain. Further, the resource element is constituted of one OFDM symbol and one subcarrier. Therefore, as shown in FIG. 3, the size of one resource block may vary depending on the subcarrier spacing. Further, in NR, "point A", which serves as a common reference point for the resource block grid, and common resource block and virtual resource block are defined.

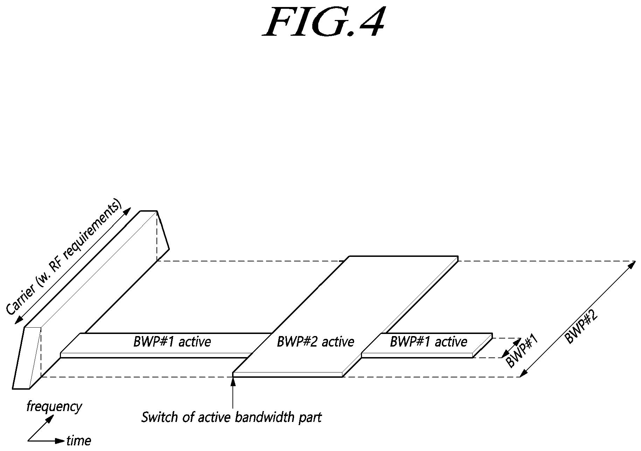

FIG. 4 is a view illustrating a bandwidth part supported by radio access technology.

In NR, unlike LTE where the carrier bandwidth is fixed at 20Mhz, the maximum carrier bandwidth ranges from 50Mhz to 400Mhz, depending on the subcarrier spacing. Therefore, it is not assumed that all UEs utilize all of these carrier bandwidths. Accordingly, in NR, as shown in FIG. 4, a bandwidth part (BWP) may be designated within the carrier bandwidth and allocated for use by the UE. Further, the bandwidth part is associated with one numerology, is composed of a subset of contiguous common resource blocks and, may be activated dynamically over time. Up to four bandwidth parts (BWPs) may be configured in the UE for each of uplink and downlink. Data is transmitted/received using the bandwidth part (BWP) activated at a given time.

For paired spectra, the uplink and downlink bandwidth parts are configured independently, while for unpaired spectra, the bandwidth parts of uplink and downlink are paired to share the center frequency, thereby preventing unnecessary frequency re-tunning between downlink and uplink operations.

### <NR initial access>

In NR, the UE performs a cell search and random access procedure to connect to the base station and perform communication.

Cell search is a procedure where the UE synchronizes with the cell of the base station using the synchronization signal block (SSB) transmitted by the base station, retrieves the physical layer cell ID, and acquires system information.

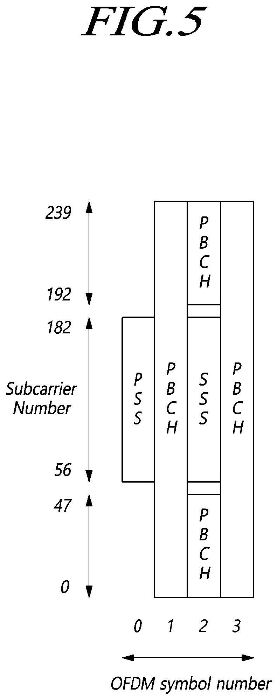

FIG. 5 is a view exemplarily illustrating a synchronization signal block in radio access technology.

Referring to FIG. 5, the SSB is constituted of a primary synchronization signal (PSS) and a secondary synchronization signal (SSS), each occupying 1 symbol and 127 subcarriers, respectively, along with a PBCH spanning 3 OFDM symbols and 240 subcarriers.

The UE monitors the SSB in time and frequency domains and receives the SSB.

The SSB may be transmitted up to 64 times within 5 ms. Multiple SSBs are transmitted using different transmission beams during 5 ms time, and the UE performs detection assuming that SSBs are transmitted every 20ms period based on a specific beam used for transmission. The number of beams available for SSB transmission within 5ms may increase as the frequency band increases. For example, up to 4 SSB beams may be transmitted below 3 GHz, SSBs may be transmitted using up to 8 different beams in a frequency band of 3 to 6 GHz, and up to 64 different beams may be utilized in a frequency band of 6 GHz or higher.

Two SSBs are included in one slot, and the start symbol position and the number of repetitions within the slot are determined based on the subcarrier spacing as follows.

Meanwhile, the SSB is not transmitted at the center frequency of the carrier bandwidth unlike the SS of typical LTE. Instead, the SSB may be transmitted at locations other than the center of the system band and, in the case supporting wideband operation, multiple SSBs may be transmitted across the frequency domain. Accordingly, the UE monitors the SSB using a synchronization raster, which represents candidate frequency locations for monitoring the SSB. The carrier raster and synchronization raster, which provide the center frequency location information for initial access, are newly defined in NR. Furthermore, the synchronization raster features a wider frequency interval than the carrier raster, enabling faster SSB searches by the UE.

The UE may obtain the master information block (MIB) through the PBCH of the SSB. The master information block (MIB) includes the minimum information necessary for the UE to receive remaining system information (remaining minimum system information (RMSI) broadcast by the network. Further, the PBCH may include information about the position of the first DM-RS symbol in the time domain, information required for the UE to monitor SIB1 (e.g., SIB1 numerology information, information related to SIB1 CORESET, search space information, PDCCH-related parameter information, etc.), offset information between the common resource block and the SSB (the absolute location of the SSB within the carrier is transmitted through SIB1), and similar information. Here, the SIB1 numerology information is equally applied to certain messages used in the random access procedure that enables the UE to access the base station after completing the cell search procedure. For example, the numerology information about SIB 1 may be applied to at least one of messages 1 to 4 for the random access procedure.

The above-described RMSI may mean system information block 1 (SIB1). SIB1 is broadcast periodically (e.g., every 160 ms) in the cell. SIB1 includes information necessary for the UE to perform the initial random access procedure, and is periodically transmitted through the PDSCH. To receive SIB1, the UE must first obtain numerology information associated with SIB1 transmission and control resource set (CORESET) information used for SIB1 scheduling through the PBCH. The UE identifies scheduling information for SIB1 using SI-RNTI in CORESET and obtains SIB1 from PDSCH according to scheduling information. The remaining SIBs, other than SIB1, may be transmitted periodically or upon request by the UE.

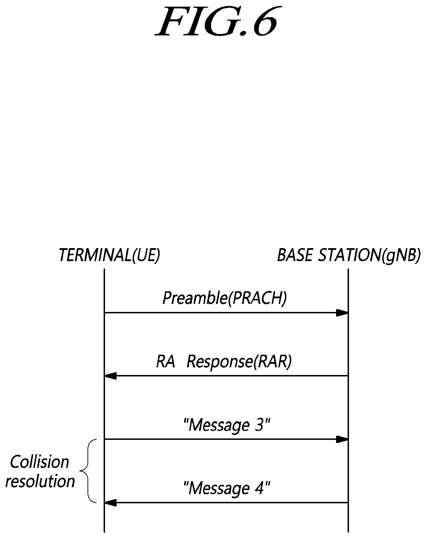

FIG. 6 is a view illustrating a random access procedure in radio access technology.

Referring to FIG. 6, if the cell search is successfully completed, the UE transmits a random access preamble to initiate random access to the base station. The random access preamble is transmitted through PRACH. Specifically, the random access preamble is transmitted to the base station through the PRACH composed of contiguous radio resources within a periodically repeated specific slot. In general, when the UE initially accesses the cell, a contention-based random access procedure is performed, and when random access is performed for beam failure recovery (BFR), a non-contention-based random access procedure is performed.

The UE receives a random access response to the transmitted random access preamble. The random access response may include a random access preamble identifier (ID), uplink radio resource (UL grant), temporary cell-radio network temporary identifier (C-RNTI), and time alignment command (TAC). Since one random access response may include random access response information for multiple UEs, the random access preamble identifier may be included to indicate which UE the included UL grant, temporary C-RNTI, and TAC apply to. The random access preamble identifier may be an identifier for the random access preamble received by the base station. The TAC may be included as information for the UE to adjust uplink synchronization. The random access response may be indicated by the random access identifier on the PDCCH, specifically, the random access-radio network temporary identifier (RA-RNTI).

Upon receiving a valid random access response, the UE processes the information included in the random access response and performs scheduled transmissions to the base station. For example, the UE applies the TAC and stores the temporary C-RNTI. Further, the UE transmits data stored in its buffer or newly generated data to the base station using the UL grant. In this case, information that may identify the UE should be included.

Finally, the UE receives a downlink message for contention resolution.

### <NR CORESET>

In NR, the downlink control channel is transmitted in a control resource set (CORESET) having a length of 1 to 3 symbols and carriers uplink/downlink scheduling information, slot format index (SFI), transmit power control (TPC) information, and other related information.

As such, NR introduced the concept of CORESET to secure the flexibility of the system. The control resource set (CORESET) refers to a time-frequency resource for a downlink control signal. The UE may use one or more search spaces in CORESET time-frequency resources to decode control channel candidates. A quasi co-location (QCL) assumption for each CORESET has been defined, which is used not only to indicate the characteristics of the analog beam direction but also the latency spread, Doppler spread, Doppler shift, and average latency, all characteristics assumed by the typical QCL.

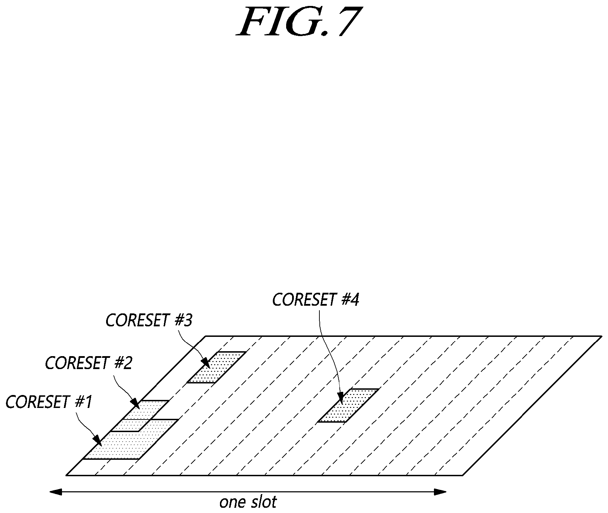

FIG. 7 is a view illustrating a CORESET.

Referring to FIG. 7, the CORESET may exist in various forms within a carrier bandwidth and within one slot. In the time domain, the CORESET may be constituted of up to 3 OFDM symbols. Further, the CORESET is defined as a multiple of 6 resource blocks up to the carrier bandwidth in the frequency domain.

The first CORESET is indicated through the MIB as part of the initial bandwidth part configuration to enable the UE to receive additional configuration and system information from the network. After establishing a connection with the base station, the UE may receive and configure one or more CORESET information through RRC signaling.

As used herein, terms such as frequency, frame, subframe, resource, resource block, region, band, subband, control channel, data channel, synchronization signal, various reference signals, various signals, and various messages related to new radio (NR) may be interpreted with various meanings as currently used or as they may be defined in the future.

Mobility control as described in this disclosure refers to a series of control procedures for changing the connection state of a UE when a cell change is required due to various circumstance, such as the movement of the UE.

### NR mobility

In typically NR technology, mobility control for cell change of the UE in the RRC connected state involves handover through explicit RRC signaling. Cell change may be triggered by L3 measurement, and handover could be executed through RRC message signaling including information necessary for accessing the target cell (one or more pieces of information among reconfiguration with Sync, target cell ID, the new C-RNTI, the target gNB security algorithm identifiers for the selected security algorithms, a set of dedicated RACH resources, the association between RACH resources and SSB(s), the association between RACH resources and UE-specific CSI-RS configuration(s), common RACH resources, and system information of the target cell). When cell change is executed, the MAC entity of the corresponding cell group is reset. The received new C-RNTI value is applied as the C-RNTI of the cell group. The UE configures the PHY/MAC/RLC/PDCP/SDAP layer according to the configuration information.

This causes more delay, overhead, and interruption time than beam change (beam level mobility) within the same cell. Beam level mobility does not require explicit RRC signaling to be triggered in the beam change process. The base station (network) may provide a measurement configuration to the UE through RRC signaling, where the measurement configuration includes SSB/CSI resource and resource set, trigger state for triggering channel, and interference measurement and report configuration. Beam level mobility may be provided through control signaling (e.g., DCI or MAC CE) of physical layer/MAC layer at a lower layer. SSB-based beam level mobility is based on the SSB associated with the initial downlink BWP. It may be configured only for the initial downlink BWP and downlink BWPs including the SSB associated with the initial downlink BWP. Beam level mobility for other DL BWPs could be performed based only on the CSI-RS. However, in the related art, beam switching supported only intra-cell mobility.

As a solution to the problems, the disclosure proposes a technology that supports cell change/switch through L1/L2 signaling.

As such, in typical NR technology, cell level mobility (cell change) was performed based on L3 signaling, resulting in greater delay, overhead, and interruption time compared to beam level mobility. Further, beam level mobility was limited to movement within the same cell.

To address these issues, the disclosure proposes a method and device for controlling PCell/PSCell/SCell in an L1/L2 signaling-based cell change/switch process.

Hereinafter, a method for providing cell level mobility based on 5G NR radio access technology is described. However, this is provided for convenience of description, and the present embodiments may be applied to cell change/switch based on any radio access technology (e.g., 6G). The embodiments described in the disclosure include information elements, procedures, and operation contents specified in any NR standard (e.g., TS 38.321 which is an NR MAC standard and TS 38.331 which is an NR RRC standard). Although the disclosure does not contain the content of the definitions, related procedures, and related UE operations for the corresponding information elements, the content set forth in the standards which are known art may be incorporated in the present embodiments. The embodiments provided below may be practiced individually or in combination.

For convenience of description, scenarios related to the present embodiment are described first. However, this is provided solely for descriptive purpose, and the present embodiments may be applied to any other network deployment scenario beyond the one described below.

An L1/L2 (signaling)-based cell change/switch may be performed for a serving cell change scenario, including i) PCell change or SCell change within one cell group in an NR stand-alone structure or ii) SpCell (PCell/PSCell) change or SCell change within one cell group (e.g., MCG or SCG) in a dual-connectivity structure. For example, among cells other than the current serving cell for one RRC connected UE, the target PCell and/or target SCells may be indicated by L1/L2 signaling-based cell change/switch, allowing the corresponding PCell/SCells to be configured/modified/added/activated as the serving cell. As another example, among the current serving cells for one RRC connected UE, the target PCell and/or target SCells may be indicated by L1/L2 signaling-based cell change/switch, enabling the corresponding target PCell/SCells may be configured/modified/changed/switched/added/activated as the serving cell.

An intra-CU intra-DU L1/L2-based cell change may be performed between different cells associated with the corresponding DU within an intra-DU connected to the corresponding CU in an intra-CU (intra-CU). For example, the corresponding cells may have different PCIs and be inter-cell synchronized. Intra-CU inter-DU L1/L2-based cell change may be performed between cells associated with different DUs, respectively, for the different DUs connected to the corresponding CU within the intra-CU. For example, the corresponding cells may have different PCIs and may not be inter-cell synchronized. For another example, the corresponding cells may have different PCIs and may be inter-cell synchronized. Any operations according to the embodiments described below may be performed individually/independently, or may be performed in any combination thereof, and it is obvious that they are also included in the scope of the disclosure.

For convenience of description, a transmit/receive point/TRP/beam/beams/beam group (BG) (via the corresponding TRP) providing one serving cell/PCell/SCell configured/activated in the UE is denoted as a first transmit/receive point (TRP). This term is used for descriptive purposes and may be replaced with any other name (e.g., primary/main/basic/SpCell associated/Serving cell associated TRP/beam/BG). Similarly, a transmit/receive point/TRP/beam/beams/beam group (BG) (via the corresponding TRP) providing a physical cell Id (PCI) different from the corresponding serving cell/PCell/SCell, or a transmit/receive point/TRP/beam/beams/beam group (BG) (via the corresponding TRP) associated with the physical cell Id (PCI) different from the corresponding serving cell/PCell/SCell is denoted as a second transmit/receive point (TRP). This term is also used for convenience of description and may be replaced with any other name (e.g., secondary/additional/assisting/non-serving cell associated TRP/beam/BG). The cell associated with the second TRP or the second TRP may be configured/released in the UE. Additionally, the cell associated with the second TRP or the second TRP may be activated/deactivated for the UE. One first TRP and one or more second TRPs may be provided/supported/configured/released/activated/inactivated for one UE.

For convenience of description, cell change/switch through L1/L2 signaling is referred to as L1/L2 triggered mobility. This term is used for convenience of description and may be replaced with any other name (e.g., fast HO, low latency HO, L1/L2 signaling based HO, low layer signaling based HO, or LTM). Here, L1/L2 may represent at least one of the following: i) L1/L2 signaling (e.g., MAC-CE/DCI), ii) L1/L2 execution instruction information, iii) quasi co location (QCL)/transmission configuration indication (TCI) state activation/update/instruction, iv) L1/L2 execution condition (based on L1 measurement), v) L1/L2 event (based on L1 measurement), vi) L1/L2 procedure, and vii) UE operation in L1/L2 layer.

Any function described below is defined as an individual-UE capability (UE radio capability or UE core network capability) and may be transmitted by the UE to the base station/core network entity (e.g. AMF/SMF) through corresponding signaling. Alternatively, any combination of functions may be combined/merged to be defined as the corresponding UE capability, which may then be transmitted by the UE to the base station/core network entity through corresponding signaling.

The base station may transmit/indicate information that allows/supports/configures the corresponding function/function combination for any function or any function combination, described below, to the UE through an RRC message. For example, this information may be indicated/provided to the UE before, after, or simultaneously with the configuring/application of the corresponding function/function combination. The RRC message may be broadcast through system information. Or, it may be indicated/transmitted to the UE through a dedicated RRC message.

Meanwhile, the distributed unit DU described in this disclosure may form a base station together with a central unit CU. For example, the next-generation radio network may be constituted of a set of base stations connected to the 5G core network (5GC) through the NG interface. The base stations are connected to each other through the Xn interface. One base station may be constituted of one CU and one or more DUs. The CU and the DU are connected to each other through the F1 interface. One DU may be connected to only one CU. The NG interface and the Xn-C interface for one base station constituted of the CU and the DU are terminated at the CU. The DUs connected with the CU are shown as only one base station to other base stations and the 5GC. The CU is a logical node hosting the RRC, SDAP and PDCP protocols of the base station. The DU is a logical node hosting the RLC, MAC and PHY layer of the base station. One DU supports one or more cells. One cell is supported by only one DU. The node hosting the user plane part of the NR PDCP should perform user inactivity monitoring and notify the node having control plane connection of inactivity or (re)activation. The node hosting the NR RLC may perform user inactivity monitoring and notify the control plane hosting node of inactivity (re)activation.

As such, according to the user plane protocol structure in the 5G/NR radio network using the base station split structure, the CU and the DU are connected through the F1 interface between the PDCP and the RLC.

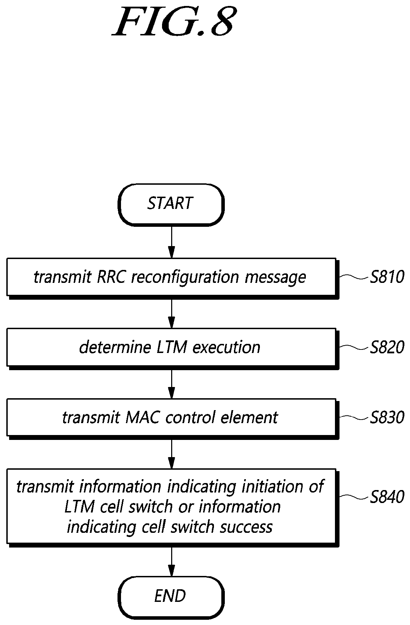

FIG. 8 is a flowchart illustrating operations of a distributed unit according to an embodiment.

Referring to FIG. 8, a distributed unit (DU) constituting a base station may perform a step of transmitting an RRC reconfiguration message including LTM candidate cell configuration information to a UE in performing an L1/L2 triggered mobility (LTM) operation (S810).

According to an embodiment, the distributed unit may transmit, to the UE, LTM candidate cell configuration information for configuring the LTM in the UE. The LTM candidate cell configuration information may be transmitted, included in an information field of the RRC reconfiguration message. For example, the RRC reconfiguration information may include at least one of reference configuration information stored in the UE and candidate cell configuration information including a difference for the reference configuration. As another example, the LTM candidate cell configuration information may include at least one of complete overall configuration information about the corresponding candidate cell and delta configuration information including a difference for the reference configuration.

The reference configuration stored in the UE may be preconfigured in the UE through an RRC message. Alternatively, the reference configuration may be transferred to the UE through a message transferred from the base station to the UE, such as system information. The add/modify candidate cell configuration information may be combined with a reference configuration preconfigured in the UE. According to an embodiment, the add/modify candidate cell configuration information may be applied to the reference configuration configured in the UE to perform an add or modify operation for a specific candidate cell. Here, the reference configuration is a configuration commonly used for LTM candidate configurations and may be applied to the delta configuration to be described below.

The distributed unit may perform a step of determining LTM execution for the UE (S820).

According to an embodiment, the distributed unit may determine whether to perform LTM execution for the UE. For example, the distributed unit may determine whether to execute the LTM based on the L1/L2 measurement result of the UE. As another example, the distributed unit may determine whether to execute the LTM of the UE according to whether a preset condition is met, using arbitrary information received from the UE.

The distributed unit may perform a step of transmitting a MAC control element (MAC CE) for the LTM cell switch to the UE (S830).

According to an embodiment, if the execution of LTM for the UE is determined, the distributed unit may transmit control information for the LTM cell switch operation of the UE. The control information may be included in the MAC CE and indicated to the UE. Upon receiving the MAC CE, the MAC entity of the UE may transfer the LTE cell switch trigger to the RRC layer in the UE.

When the LTM candidate cell configuration information included in the RRC reconfiguration message includes information indicating the activation state of the secondary cell configured in the UE, the UE may control the activation or deactivation operation of the secondary cell accordingly upon receiving the MAC CE. For example, if the UE receives a MAC CE instructing LTM execution, the UE may identify the activation status information about the secondary cell based on the LTM candidate cell configuration information and activate or deactivate the secondary cell.

As such, the distributed unit may indicate the initiation of LTM execution to the UE through the MAC CE.

The distributed unit may perform a step of transmitting i) information that indicates the initiation of LTM cell switch or ii) information that indicates cell switch success to a central unit (CU) constituting the base station (S840).

According to an embodiment, the distributed unit may transfer information indicating success of the cell switch of the UE to the connected central unit. Alternatively, the distributed unit may transmit information indicating that the UE has initiated the LTM cell switch operation to the connected central unit.

According to an embodiment, information indicating the success of cell switch may be transmitted to the central unit through an F1 application protocol (F1AP) message, which includes target cell identification information, upon receiving data from the UE indicating the successful completion of the LTM cell switch.

According to another embodiment, information indicating the initiation of the LTM cell switch may be transmitted to the central unit through an F1 application protocol (F1AP) message, which includes target cell identification information to indicate the initiation of the LTM cell switch procedure for the UE.

Through the above operations, the distributed unit may trigger cell switching of the UE at the lower layer L1/L2, enabling a fast and efficient cell change of the UE. Further, when a cell change operation for the UE is initiated or successfully completed, this information may be conveyed to the central unit, allowing the central unit to recognize the UE cell change.

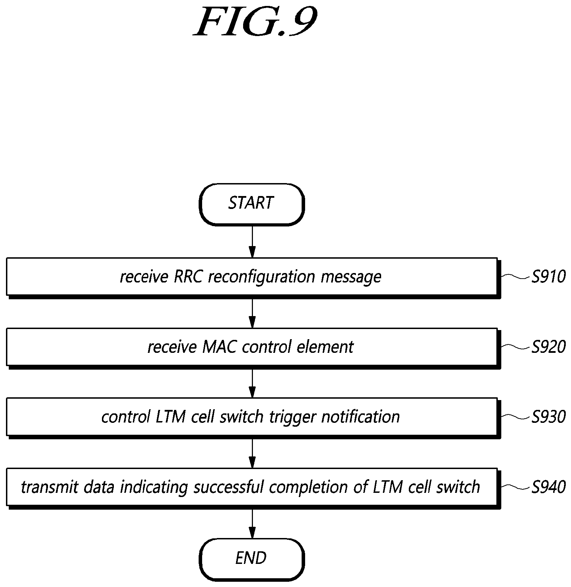

FIG. 9 is a flowchart illustrating operations of a UE according to an embodiment.

Referring to FIG. 9, in performing an L1/L2 triggered mobility (LTM) operation, the UE may perform a step of receiving an RRC reconfiguration message including LTM candidate cell configuration information from a distributed unit (DU) constituting the base station (S910).

According to an embodiment, the UE may receive LTM candidate cell configuration information for configuring the LTM in the UE from the distributed unit. The LTM candidate cell configuration information may be received, included in an information field of the RRC reconfiguration message. For example, the RRC reconfiguration information may include at least one of i) reference configuration information stored in the UE and ii) candidate cell configuration information including a difference for the reference configuration. As another example, the LTM candidate cell configuration information may include at least one of i) complete overall configuration information about the corresponding candidate cell and ii) delta configuration information including a difference for the reference configuration.

The reference configuration stored in the UE may be preconfigured through an RRC message. Alternatively, the reference configuration may be transferred to the UE through a message transferred from the base station to the UE, such as system information. The add/modify candidate cell configuration information may be combined with a reference configuration preconfigured in the UE. For example, the add/modify candidate cell configuration information may be applied to the reference configuration configured in the UE to perform an add or modify operation for a specific candidate cell. Here, the reference configuration is a configuration commonly used for LTM candidate configurations and may be applied to the delta configuration to be described below.

The UE may perform a step of receiving a MAC control element for an LTM cell switch from the distributed unit (S920).

The distributed unit may determine execution of the LTM cell switch when a preset condition is met based on arbitrary information received from the UE or an L1/L2 measurement result. If execution of the LTM cell switch is determined by the distributed unit, the UE may receive an LTM cell switch instruction from the distributed unit through the MAC CE.

The UE may perform a step of controlling to notify the RRC layer that the LTM cell switch has been triggered by the MAC layer upon receiving the MAC control element (S930).

According to an embodiment, if a MAC CE is received, the UE may perform an LTM cell switching operation. For example, if a MAC CE is received, the MAC entity of the UE may transfer a trigger for the LTM cell switch to the RRC layer in the UE. When the LTM candidate cell configuration information included in the RRC reconfiguration message includes information indicating the activation state of the secondary cell configured in the UE, upon receiving the MAC CE, the UE may control the activation or deactivation operation of the secondary cell accordingly. For example, upon receiving a MAC CE instructing LTM execution, the UE may identify the activation status information of the secondary cell based on the LTM candidate cell configuration information and either activate or deactivate the secondary cell accordingly.

The UE may perform a step of transmitting, data to the distributed unit to indicate successful completion of the LTM cell switch, based on a result of performing the LTM cell switch operation (S940).

According to an embodiment, the UE may perform an LTM cell switching operation and transmit data to the distributed unit to indicate that the LTM execution has been successfully completed based on the result of the operation. For example, the UE may indicate the successful completion of the LTE cell change to the distributed unit through at least one of the following: HARQ ACK, UCI, UL MAC CE, MSG1, MSG A, and PUSCH. As another example, if the UE fails to complete the LTM cell switch for any reason, failure information may be transmitted to the distributed unit. For example, the UE may indicate the failure through at least one of HARQ ACK, UCI, UL MAC CE, MSG1, MSG A, and PUSCH. In this case, cause information about the reasons for the failure may be included.

Meanwhile, the distributed unit may transfer information indicating the success of the cell switch of the UE to the connected central unit. Alternatively, the distributed unit may transmit information indicating that the UE has initiated the LTM cell switch operation to the connected central unit.

For example, upon receiving data from the UE indicating successful completion of the LTM cell switch,, the distributed unit may transmit information indicating cell switch success to the central unit through an F1 application protocol (F1AP) message, which includes target cell identification information.

As another example, information indicating the initiation of the LTM cell switch may be transmitted to the central unit through an F1 application protocol (F1AP) message including target cell identification information to indicate the initiation of the LTM cell switch procedure for the UE.

According to the embodiments described above, the distributed unit may trigger cell switching of the UE in the lower layer L1/L2 to indicate a fast and efficient cell change of the UE. Further, when an operation for cell change of the UE is initiated or successfully completed, this information may be conveyed to the central unit, allowing the central unit may recognize the UE cell change.

Hereinafter, more various embodiments related to the above-described operations of the distributed unit, UE, and central unit are described below for each step. Each of the embodiments described below may be performed according to any combination. Furthermore, these embodiments may be performed in any of the above-described steps, or a separate step may be added or modified. Each of the steps described above may also be combined or separated, and the order may be changed as necessary. The term "base station" used below may be referred to the above-described distributed unit, and the division of operations between the central unit and the distributed unit may be adjusted according to the functional separation between them .

### Candidate target configuration for L1/L2 triggered mobility procedure

The L1/L2 triggered mobility procedure may include a dynamic switch trigger step, which executes a cell change/switch for the UE through L1/L2 signaling and provides the candidate target configuration to the UE through an RRC message.

The base station may indicate the candidate target configuration to the UE through the RRC message.

For example, one candidate target configuration may be indicated using a single RRC reconfiguration message. Alternatively, one candidate target configuration may be included in the RRC message through a single RRC reconfiguration information element (RRCReconfiguration IEs)/container and indicated. The candidate target configuration may include one or more of the following, as specified in the RRC reconfiguration message or RRC reconfiguration information element: i) a radio bearer configuration, ii) a master cell group configuration, and iii) a secondary cell group configuration. Accordingly, the base station may configure/activate/deactivate/deactivate the PCell/PSCell(s) indicated by the target configuration of the UE as a serving cell through the following L1/L2 signaling. The base station may indicate one or more candidate target configuration(s) to the UE through one or more RRC reconfiguration information elements (RRCReconfiguration IEs)/containers. The corresponding candidate configuration may be distinguished by an index/ID that identifies the corresponding candidate configuration. Additionally, the corresponding candidate configuration may be indexed and classified based on the order in which the corresponding candidate configurations are provided.

As another example, one candidate target configuration may be mapped to one cell group configuration information element (CellGroupConfig IE) and indicated. A configuration by another information element (e.g., a radio bearer configuration) on the RRC reconfiguration message including the corresponding candidate target configuration may be applied/maintained to the UE by another corresponding information element. Through this, the base station may configure/activate the UE's current/source serving PCell/PSCell/SCell(s) by changing/switching it to the PCell/PSCell(s) indicated through the target configuration through the following L1/L2 signaling. The base station may indicate one or more candidate target configuration(s) to the UE through one or more cell group configuration information elements. The corresponding candidate configuration may be distinguished by an index. For each candidate target configuration, other information elements (e.g., the whole/part of the radio bearer configuration) other than the cell group configuration information element may be defined and applied as common configuration information. Information elements requiring different configurations for each candidate target configuration may be included as separate dedicated information elements in each candidate target configuration, or may be included as associated separate dedicated information elements.

As another example, upon receiving L1/L2 signaling, the UE may maintain a configuration that is specified by an information element not indicated by the candidate target configuration, or by an information element (e.g., the whole/part of the radio bearer configuration) other than the cell group configuration included in the candidate target configuration. For example, the UE may maintain any MAC UE variable (e.g., Bj which is maintained for each logical channel j, BFI_COUNTER (per Serving Cell or per BFD-RS set of Serving Cell configured with two BFD-RS sets): counter for beam failure instance indication, LBT_COUNTER (per Serving Cell): counter for LBT failure indication) (without initializing it)) without MAC reset. As another example, any L2 buffer (e.g., MSG3 buffer, MSGA buffer, RLC buffer, PDCP buffer) may be maintained without being flushed. As another example, the UE may not perform RLC re-establishment, PDCP re-establishment, or PDCP recovery. As another example, the UE may maintain i) any RLC UE variable/timer (TX_Next_Ack - Acknowledgement state variable, TX_Next - Send state variable, POLL_SN - Poll send state variable, RX_Next - Receive state variable, RX_Next_Status_Trigger, RX_Highest_Status, RX_Next_Highest, TX_Next - UM send state variable, RX_Next_Reassembly, RX_Timer_Trigger - UM t-Reassembly state variable, RX_Next_Highest- UM receive state variable, t-PollRetransmit, t-Reassembly, t-StatusProhibit), and ii) any PDCP UE variable/timer (TX_NEXT: This state variable indicates the COUNT value of the next PDCP SDU to be transmitted, RX_NEXT: This state variable indicates the COUNT value of the next PDCP SDU expected to be received, RX_DELIV: This state variable indicates the COUNT value of the first PDCP SDU not delivered to the upper layers, but still waited for, RX_REORD: This state variable indicates the COUNT value following the COUNT value associated with the PDCP Data PDU which triggered t-Reordering, discardTimer, t-Reordering timer) (without setting it to the initial value and/or without stopping/resetting the timer in operation). The UE may maintain the UE variable/timer for the SRB and UM DRB as well.

In the above-described embodiments, one candidate target configuration may include a special cell (SpCell) configuration and/or one or more SCell(s) configurations through a master cell group configuration/secondary cell group configuration/cell group configuration.

When the base station indicates the RRC message including the candidate target configuration to the UE, the candidate target configuration may indicate a delta configuration (e.g., indicating information different from the reference) with the previous candidate target configuration as the candidate target configuration, as the candidate target configuration. Accordingly, signaling overhead may be reduced compared to a method of indicating a complete/full configuration as a candidate target configuration. When the previous candidate target configuration is not indicated/stored/configured/applied/executed/maintained as the reference configuration information, or when the previous candidate target configuration having a corresponding candidate target configuration index is not indicated/stored/configured/applied/executed/maintained, the base station may indicate the delta (for the difference) configuration with the UE's current/source configuration as the reference configuration as the candidate target configuration, for the corresponding candidate target configuration. Alternatively, the base station may use the delta configuration with the current (applied) serving cell configuration/master cell group configuration/radio configuration/RRC reconfiguration as the reference configuration for the candidate target configuration, as the candidate target configuration, and indicate the same to the UE. Otherwise, a delta configuration with a previous/stored candidate target configuration (with a corresponding candidate target configuration index) as the reference configuration for the candidate target configuration may be indicated as the candidate target configuration.

As another example, when a previous candidate target configuration is indicated/stored/configured/applied/executed/maintained as the reference configuration information for the UE, the base station may use the delta configuration with the previous candidate target configuration having the corresponding candidate target configuration index as the reference configuration as the candidate target configuration and indicate the same to the UE. For example, when a base station instructs a UE to configure an LTM candidate target, it may instruct a complete/full LTM candidate cell configuration. For example, when the base station indicates the LTM candidate target configuration to the UE, the base station may indicate a complete/full LTM candidate cell configuration. The UE may store the received candidate target configuration and information for indicating that the candidate target configuration is a complete LTM candidate cell configuration as UE variables. As another example, when the base station indicates the LTM candidate target configuration, the base station may use the source cell/gNB-DU configuration as the reference configuration to indicate the delta configuration for the corresponding reference configuration as the LTM candidate cell configuration. The corresponding reference configuration may be indicated to the UE together with the corresponding candidate target configuration. The UE may store the received candidate target configuration and the corresponding reference configuration. As another example, when the base station indicates the LTM candidate target configuration, the base station may use the target cell/gNB-DU configuration as the reference configuration to indicate the delta configuration for the corresponding reference configuration as the LTM candidate cell configuration. The corresponding reference configuration may be indicated to the UE together with the corresponding candidate target configuration. The UE may store the received candidate target configuration and the corresponding reference configuration. As another example, a complete LTM configuration may be generated by applying the candidate target configuration to the reference configuration.

If the base station indicates the candidate target configuration to the UE through the RRC message, the UE adds it as a new candidate target configuration entry under the index used to identify the candidate target configuration in the corresponding UE variable. If an index for identifying the corresponding candidate target configuration already exists, the corresponding candidate target configuration entry is replaced/modified in the corresponding UE variable. The UE variable in which the candidate target configuration is stored may be defined and used as an RRC UE variable. Alternatively, the UE variable may be defined and used as a (RRC) lower layer UE variable (e.g., PHY/MAC/RLC/PDCP). Additionally, the UE variable in which the candidate target configuration is stored may be defined and used as a UE variable of a corresponding sublayer, depending on the detailed information element included in the corresponding candidate target configuration.

### L1/L2 mobility trigger command for L1/L2 triggered mobility procedure

In order to indicate a dynamic switch through L1/L2 signaling, a MAC CE (or DCI or any L1/L2 signaling) may be defined. For convenience of description, an embodiment using MAC CE is described below; however, it is understood that DCI or any L1/L2 signaling is also included within the scope of the embodiments.

The MAC CE may include information indicating the application/execution of the candidate target configuration received through the RRC message. For example, it may include index information for identifying the corresponding candidate configuration.

If the candidate target configuration includes a special cell (SpCell) configuration and/or one or more SCell(s) configurations, the UE receiving the MAC CE may apply/execute the cell change/switch to the special cell/PCell of the candidate target configuration. The UE may configure the SCell(s) of the corresponding candidate target configuration.

For example, when receiving a MAC CE indicating a dynamic switch, if the MAC CE indicates that the SCell(s) is configured in an activated state in the LTM candidate target configuration (e.g., information for indicating that the SCell state is activated is set or included as activated), the UE may configure/apply/execute the target SCell(s). The MAC of the UE may request the RRC to apply the corresponding SCell configuration. The MAC of the UE may indicate to the RRC that the LTM cell switch procedure has been triggered. Furthermore, the MAC of the UE may indicate to the RRC that the LTM cell switch MAC CE has been received. The MAC of the UE may indicate index information to identify a corresponding target candidate configuration included in the corresponding MAC CE to the RRC. The RRC of the UE may apply a stored LTM candidate cell configuration. The RRC of the UE may also apply a corresponding SCell configuration and configure the SCell to be in an active state. Alternatively, the MAC of the UE may apply a corresponding SCell configuration stored (in the MAC layer) and activate the corresponding SCell.

As another example, upon receiving a MAC CE indicating a dynamic switch, if the UE is instructed to configure the SCell(s), having the corresponding SCellindex, to be in the activated state in the candidate target configuration (e.g., information for indicating that the SCell state is activated is set or included as activated), the UE may configure/apply/execute the target SCell(s). The MAC of the UE may then activate the corresponding SCell. The corresponding serving SCell and the SCell of the corresponding candidate target configuration may be the same cell. If the corresponding serving SCell is already in the active state, upon receiving the corresponding MAC CE, the UE may maintain the active state of the corresponding SCell to continue transmitting and receiving data. Otherwise, the UE may activate the corresponding SCell.

If a cell configured of SCell in the current configuration is used as an SCell in the candidate target configuration, the SCellindex for the corresponding SCell may be shared and used (e.g., reused). The current SCellindex value of the cell configured as the SCell may remain the same as the SCellindex included in the candidate target configuration.

As another example, upon receiving a MAC CE indicating a dynamic switch, the UE may configure/apply/execute the cell as a target PCell if the UE is instructed to configure one of the serving SCell(s) with the corresponding SCellindex as a PCell in the candidate target configuration. The corresponding serving SCell and the PCell of the corresponding candidate target configuration may be the same cell.

If a cell configured as an SCell in the current configuration is used/indicated as a PCell in the candidate target configuration, the SCellindex value allocated to the SCell in the current configuration may not (e.g., must not) be allocated as an SCellindex value to any other SCell in the candidate target configuration. As another example, to allow unrestricted use of the SCellindex (if a cell configured of SCell in the current configuration is used/indicated as a PCell in the candidate target configuration), the corresponding SCellindex value may be assigned to any SCell in the current configuration regardless of the SCellindex value assigned to the corresponding SCell. It is possible to independently allocate the SCellindex between the current configuration and the candidate target configuration. Alternatively, the SCellindex may not be shared between the current configuration and the candidate target configuration.

As another example, information indicating the index to distinguish the SCell used for candidate target configuration may be defined and indicated (e.g., provided) as information distinct from the typical SCellindex. Accordingly, it is possible to independently allocate the SCellindex between the current configuration and the candidate target configuration. Alternatively, the SCellindex may not be shared between the current configuration and the candidate target configuration.

As another example, upon receiving a MAC CE indicating a dynamic switch, the UE may configure/apply/execute the cell as a target SCell if it is instructed to configure the serving PCell of the UE as the SCell in the candidate target configuration. The corresponding serving PCell and the SCell of the corresponding candidate target configuration may be the same cell.

If the cell configured of the PCell in the current configuration is used/indicated as the SCell in the candidate target configuration, the serving cell index (Servcellindex) value allocated to the PCell in the current configuration may be zero. In the candidate target configuration, the SCellindex for the corresponding cell may be allocated from among the SCellindex values not assigned in the current configuration. As another example, to allow unrestricted use of SCellindex (if a cell configured of PCell in the current configuration is used/indicated as an SCell in the candidate target configuration), the corresponding SCellindex value may be assigned to any SCell in the current configuration regardless of the SCellindex value assigned to the corresponding SCell. Alternatively, the SCellindex may be defined and indicated as information distinct from the typical SCellindex.

As another example, when receiving a MAC CE indicating a dynamic switch, the UE may configure/apply/execute the corresponding target SCell(s) (in the inactive state) for the serving SCell(s) having the corresponding SCellindex. The UE may configure the corresponding SCell to be in the inactive state. Alternatively, the MAC of the UE may deactivate the corresponding SCell.

As another example, upon receiving a MAC CE indicating a dynamic switch, the UE may configure/apply/execute the target SCell(s) to be in the active/inactive state for the serving SCell(s) having the corresponding SCellindex. For example, if the corresponding MAC CE is received for the SCell that is in the inactive state in the current configuration, the MAC of the UE may configure the corresponding SCell to remain in the inactive state in the candidate target configuration. If the corresponding MAC CE is received for the PCell/SCell that is operating in the active state in the current state, the MAC of the UE may configure the corresponding SCell to be in the active state in the candidate target configuration.

As another example, the MAC CE indicating a dynamic switch may include information for indicating the state of the SCell included in the candidate target configuration. If the base station indicates the candidate target configuration to the UE through the RRC message, the UE adds the configuration as a new candidate target configuration entry with the index used to identify the candidate target configuration in the corresponding UE variable. If an index for identifying the corresponding candidate target configuration already exists, the corresponding candidate target configuration entry is replaced/modified in the corresponding UE variable. The base station load or radio environment may change before the base station adds/modifies the candidate target configuration to the UE and actually determines a dynamic switch. When indicating a dynamic switch, it may be desirable to activate/deactivate the SCell while considering the candidate target SCell(s) state to facilitate data transmission and reception. For example, a MAC CE for indicating a dynamic switch may be defined separately as: i) a MAC CE that includes information indicating whether to activate SCell(s); and ii) a MAC CE that does not include the information. For example, each MAC CE may be defined by allocating different LCIDs. Accordingly, when it is not necessary to indicate whether to activate SCell(s), signaling may be performed with reduced overhead for indicating activation or deactivation.

As another example, the maximum number of SCells that may be indicated in the MAC CE for indicating a dynamic switch, including information about whether to activate the SCell(s), may be limited to a specific number (e.g., 4, 8). For example, this limit may be based on the number of SCell(s) included in the candidate target configuration. In the related art, the SCell activation/deactivation MAC CE could indicate whether to activate/deactivate up to 31 SCells through four octets, which could result in excessive overhead. To address this, based on the number of SCell(s) included in the target configuration, a bit map may be configured to indicate an active/inactive state of the SCell configured for index/ID/identification information for indicating the SCell.

As another example, a one-bit indicator indicating whether to activate SCell(s) may be included in the MAC CE for indicating a dynamic switch. For example, based on the corresponding information, the corresponding SCell(s) may be activated/deactivated for all SCell(s) included in the candidate target configuration. As another example, a one-bit indicator instructing to maintain the SCell(s) state may be included in the MAC CE for indicating a dynamic switch. For example, based on this information, the UE may maintain the active or inactive state of the corresponding SCell for the corresponding SCell included in the candidate target configuration, according to the current serving PCell/SCell state.

As another example, the MAC CE for indicating a dynamic switch may include information indicating whether bitmap information for activation/deactivation, according to the corresponding SCellindex, is successively included for the SCell included in the candidate target configuration. If the corresponding information is included, a MAC CE including an SCell activation/deactivation bitmap may be transmitted. Otherwise, a MAC CE that does not include the corresponding SCell activation/deactivation bitmap may be transmitted.

As another example, when the base station transmits a MAC CE indicating a dynamic switch to the UE, the UE may simultaneously transmit an SCell activation/deactivation MAC CE that indicates activation/deactivation according to the SCellindex for the SCell included in the candidate target configuration. The two MAC CEs may be multiplexed and included in one MAC PDU. The two MAC CEs may be included in the MAC PDU and indicated in the order of (1) MAC CE indicating a dynamic switch, followed by (2) the MAC CE indicating SCell activation/deactivation.

As another example, upon receiving a MAC CE indicating a dynamic switch, the UE may configure the current serving SCell as the target serving SCell and maintain the active state. To that end, the candidate target configuration may include add/modify information (e.g., sCellToAddModList) for the corresponding SCell. The corresponding candidate target configuration may be configured by sharing the index of the corresponding SCell (e.g., the SCellindex included in the candidate target configuration) with the same value as the index of the current serving SCell. The SCellindex included in the candidate target configuration then becomes a part of the current UE configuration. The UE may modify the corresponding SCell configuration according to dedicated SCell configuration information (e.g., SCellConfigDedicated) included in the candidate target configuration. The candidate target configuration may include information indicating a corresponding SCell state. If this information is included, t the UE may configure the corresponding SCell to be in an active state. The MAC of the UE may then activate the corresponding SCell. The information indicating the SCell state may be provided as Boolean information that indicates activation or deactivation of the SCell. Alternatively, this information may be indicated as a field that is optionally present when the corresponding SCell is activated. If this corresponding information is omitted, the UE may configure the corresponding SCell to be in an inactive state.

As another example, upon receiving a MAC CE indicating a dynamic switch, the UE may apply/execute the corresponding candidate target configuration (or the corresponding candidate target configuration stored in the corresponding UE variable). If the current reference configuration and the candidate target configuration share the index for the SCell(s) and/or the corresponding SCell(s) in the current reference configuration and the candidate target configuration continue to be configured as SCell(s) in the current reference configuration, the candidate target configuration may be indicated to the UE using the delta configuration for the corresponding SCell. If the current reference configuration and candidate target configuration share the index for SCell(s), but the SCell(s) included in the current reference configuration are not longer configured as SCell(s) in the candidate target configuration (e.g., the SCell in the current reference configuration is reconfigured as PCell in the candidate target configuration, and SCell in the current reference configuration is not included in the candidate reference configuration), the UE (or base station) may release the SCell included in the current configuration. Additionally, the UE may stop a deactivation timer (sCellDeactivationTimer) associated with the SCell. Accordingly, when the corresponding SCell is changed to PCell, the configuration for the corresponding SCell may be explicitly removed from the UE to remove ambiguity. Alternatively, the base station may reuse the corresponding SCell index.

### Separately providing intra DU MAC CE and inter DU MAC CE

When performing a dynamic cell change/switch according to L1/L2 triggered mobility, there may be a significant difference in UE operation between intra DU cell change/switch and inter DU cell change/switch. When an inter DU cell change/switch occurs, the PHY/MAC/RLC sublayer included in the DU is changed, requiring the UE to perform synchronization/MAC reset/RLC reset on the corresponding PHY/MAC/RLC sublayer.

On the other hand, the intra DU cell change/switch may not require one or more operations related to synchronization/MAC reset/RLC reset on the PHY/MAC/RLC sublayer. For example, the corresponding DU may include, in the corresponding MAC CE, any timing advance information (e.g., Timing Advance Command field indicates the index value TA used to control the amount of timing adjustment that the MAC entity has to apply in TS 38.213, the length of the corresponding information field (TA index value) may be set to one of 12 bits and 6 bits.). The DU may transmit this information in the corresponding MAC CE, thereby performing a dynamic cell switch/change without a random access operation. Additionally, the corresponding DU may maintain the RLC entity, thereby avoiding an RLC reset.

Therefore, the MAC CE for indicating a dynamic switch may be defined separately into a MAC CE (including information) for inter-DU cell change/switch and a MAC CE (including information) for intra-DU cell change/switch. For example, each MAC CE may be defined by allocating different LCIDs. Accordingly, signaling may be performed with reduced unnecessary overhead. When a MAC CE for an intra DU cell change/switch (or including the information) is received, the UE may perform a dynamic cell switch/change without one or more operations, such as MAC reset, random access, and RLC reset.

As another example, to reduce the interruption time of L1/L2-triggered mobility by simplifying the above-described synchronization operation, a MAC CE for indicating timing advance information about the candidate target cell may be indicated (e.g., transmitted). The MAC CE may include one or more of the following: i) information for identifying a candidate target configuration, ii) a serving cell ID for a PCell of a candidate target configuration, iii) a cell index (e.g., PCI) for the PCell of the candidate target configuration, and iv) timing advance information. The information may be defined with an LCID which is distinct from the timing advance MAC CE of the typical art. If the UE receives the corresponding MAC CE, the UE may apply the timing advance command to the corresponding candidate target PCell. The UE may start/restart a specific timer (e.g., a timing alignment timer) for the corresponding candidate target PCell. If a MAC CE for indicating a dynamic switch is received while the timer is in operation, the UE may perform a cell change/switch without performing random access if the MAC CE corresponds to the candidate target configuration (if it is for cell change/switch to the candidate target PCell).

### CU/DU signaling for L1/L2 triggered mobility procedure

NR provides a split structure that splits a base station (gNB) into a central unit (hereinafter, referred to as CU/gNB-CU for convenience of description) and a distributed unit (hereinafter, referred to as DU/gNB-DU for convenience of description) to support efficient network construction. The radio network is constituted of one set of base stations connected to the 5G core network (5GC) through the NG interface. The base stations are connected to each other through the Xn interface. One base station may be constituted of one gNB-CU and one or more gNB-DUs. The gNB-CU and the gNB-DU are connected to each other through the F1 interface. One gNB-DU may be connected to only one gNB-CU. The NG interface and the Xn-C interface for one base station constituted of the gNB-CU and the gNB-DU are terminated at the gNB-CU. The gNB-DUs connected with the gNB-CU are shown as only one base station to other base stations and the 5GC. The gNB-CU is a logical node hosting the RRC, SDAP and PDCP protocols of the base station. The gNB-DU is a logical node hosting the RLC, MAC and PHY layer of the base station. One gNB-DU supports one or more cells. One cell is supported by only one gNB-DU.

Described first is an intra-CU intra-DU L1/L2-based cell change scenario between different cells associated with the corresponding DU in an intra-DU, which is connected to the corresponding CU in an intra-CU (intra-CU). Dynamic cell change/switch determination for L1/L2 triggered mobility may be performed by the DU. For example, the DU receiving reporting on L1 measurement results of the UE may determine dynamic cell change/switch to provide L1/L2 triggered mobility. The DU may indicate (e.g., transmit/provide) the MAC CE for dynamic cell change/switch to the UE. As described above, the corresponding MAC CE may include index information for identifying a candidate target configuration. The base station/CU may change/modify the radio configuration for the corresponding UE based on the base station load, L3 measurement reporting, or similar parameters. In this case, the base station needs to be aligned with the current wireless configuration configured in the corresponding UE. Accordingly, if the dynamic cell change/switch is performed by the DU, the CU needs to receive and recognize information indicating that the dynamic cell change/switch is performed by the corresponding candidate target configuration.

For example, the DU may indicate (e.g., notify) the CU to instruct it to execute dynamic cell change/switch to provide L1/L2 triggered mobility to the CU. The corresponding information may transmit, to the CU, information for instructing to transmit the corresponding cell change command when receiving any uplink data/acknowledgment information (e.g., HARQ ACK, UCI, UL MAC CE, MSG1, or MSGA) for the MAC CE indicating the dynamic cell change/switch from the UE. For example, information for indicating that LTM cell change MAC CE transmission has been initiated to the UE may be transmitted to the CU. As another example, the DU may send access success to the CU when it receives any uplink data/acknowledgment information (e.g. HARQ ACK, UCI, UL MAC CE, MSG1, MSGA, or RRC reconfiguration complete message) to indicate that the dynamic cell change/switch has been successfully completed for the MAC CE indicating the dynamic cell change/switch. For example, if the UE performs a random access procedure during an LTM cell switching process, the UE may consider the LTM execution to be successfully completed when the random access procedure is successfully completed. If the random access procedure is not performed, the LTM execution may be considered successfully completed when the distributed unit determines that the first uplink data of the UE has been successfully received. The UE may transmit MSG1 including a random access preamble to the DU. The UE may transmit a scheduling request (SR) to the DU for uplink data transmission. The UE may transmit a buffer status report (BSR) MAC CE for uplink data transmission to the DU. The UE may send an RRC reconfiguration complete message to the DU upon successful completion of LTM execution. If the DU receives the above-described uplink data/acknowledgment information, the DU may consider that the UE has successfully completed LTM cell switching and transmit access success to the CU.

The corresponding information may be transmitted to the CU through the F1AP message. The corresponding message may include index information to identify the corresponding candidate target configuration. The message may include any information included in the disclosure, (e.g., information for indicating the SCell state, information for identifying the candidate target configuration, serving cell ID for the PCell of the candidate target configuration, cell index (e.g., NR CGI or PCI) for the PCell of the candidate target configuration, timing advance information, SSB, etc.). When the CU receives the corresponding message, the RRC/PDCP of the CU may perform one or more operations according to the embodiments of the disclosure. For example, the CU may indicate a delta configuration to the UE using the received candidate target configuration as a reference configuration.

Next described is an intra-CU inter-DU L1/L2-based cell change scenario between different DUs connected to a corresponding CU within an intra-CU. Dynamic cell change/switch determination for L1/L2 triggered mobility may be performed by the source DU. For example, the source DU may receive reporting on L1 measurement results of the UE and determine dynamic cell change/switch to provide L1/L2 triggered mobility. The source DU may indicate the MAC CE for dynamic cell change/switch to the UE. As described above, the corresponding MAC CE may include index information for identifying a candidate target configuration. The base station/CU may change/modify the radio configuration for the corresponding UE based on the base station load, L3 measurement reporting, or similar information. In this case, the base station needs to be aligned with the existing wireless configuration configured in the corresponding UE. Accordingly, if the dynamic cell change/switch is performed by the source DU so that a cell change to the target DU is performed, the CU needs to receive and recognize information indicating that the dynamic cell change/switch has been performed by the corresponding candidate target configuration. For example, the source DU may indicate the CU for instructing to execute dynamic cell change/switch to provide L1/L2 triggered mobility to the CU. The corresponding information may transmit, to the CU, information for instructing to transmit the corresponding cell change command when receiving any uplink data/acknowledgment information (e.g., HARQ ACK, UCI, or UL MAC CE) for the MAC CE indicating the dynamic cell change/switch from the UE. For example, information for indicating that LTM cell change MAC CE transmission has been initiated to the UE may be transmitted to the CU. As another example, the target DU may send access success to the CU when it receives any uplink data/acknowledgment information (e.g. MSG1, MSGA, UCI, UL MAC CE, or RRC reconfiguration complete message) to indicate that the dynamic cell change/switch has been successfully completed for the MAC CE indicating the dynamic cell change/switch. For example, if the UE performs a random access procedure during an LTM cell switching process, the UE may consider the LTM execution to be successfully completed when the random access procedure is successfully completed. If the random access procedure is not performed, the LTM execution may be considered successfully completed when the distributed unit determines that the first uplink data of the UE has been successfully received. The UE may transmit MSG1 including a random access preamble to the target DU. Alternatively, the UE may transmit a scheduling request (SR) to the target DU for uplink data transmission. The UE may transmit a buffer status report (BSR) MAC CE for uplink data transmission to the target DU. The UE may send an RRC reconfiguration complete message to the DU upon successful completion of LTM execution. If the DU receives the above-described uplink data/acknowledgment information, the target DU may consider that the UE has successfully completed LTM cell switching and transmit access success to the CU.

The corresponding information may be transmitted to the CU through the F1AP message. The corresponding message may include index information for identifying the corresponding candidate target configuration. The message may include various types of information (e.g., information for indicating the SCell state, information for identifying the candidate target configuration, serving cell ID for the PCell of the candidate target configuration, cell index (e.g., NR CGI or PCI) for the PCell of the candidate target configuration, timing advance information, SSB, etc.) included in the disclosure. When the CU receives the corresponding message, the RRC/PDCP of the CU may perform one or more operations according to the embodiment of the disclosure. For example, the CU may indicate a delta configuration to the UE using the received candidate target configuration as a reference configuration.

According to the embodiments described above, a specific configuration and signaling information for controlling mobility based on L1/L2 may be provided. Thus, a cell change to reduce delay may be efficiently performed.

Hereinafter, hardware and software configurations of a distributed unit and a UE capable of performing all or some of the above-described embodiments will be described with the accompanying drawings.

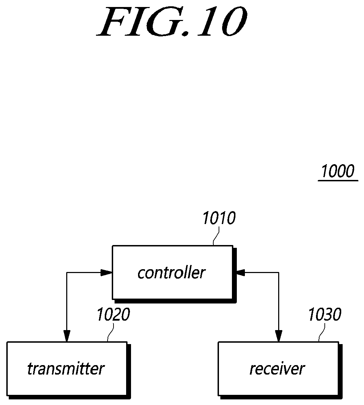

FIG. 10 is a block diagram illustrating a distributed unit according to another embodiment.

Referring to FIG. 10, a distributed unit 1000 may constituting a base station with a centra unit (CU) and perform an L1/L2 triggered mobility (LTM) operation. Such a distributed unit 1000 may include a transmitter 1020 transmitting an RRC reconfiguration message including LTM candidate cell configuration information to a UE and a controller 1010 determining LTM execution for the UE. The transmitter 1020 may transmit a MAC control element for an LTM cell switch to the UE. The transmitter 1020 may transmit information indicating the initiation of LTM cell switch or information indicating cell switch success to the central unit (CU) that constitutes the base station with the distributed unit 1000.

According to an embodiment, the LTM candidate cell configuration information may be transmitted and included in an information field of the RRC reconfiguration message. For example, the RRC reconfiguration information may include at least one of reference configuration information stored in the UE and candidate cell configuration information including the difference for the reference configuration. As another example, the LTM candidate cell configuration information may include at least one of either the complete overall configuration information about the corresponding candidate cell or delta configuration information including a difference from the reference configuration.

The reference configuration stored in the UE may be preconfigured through an RRC message. Alternatively, the reference configuration may be transferred to the UE through a message transferred from the base station to the UE, such as system information. The add/modify candidate cell configuration information may be combined with a reference configuration preconfigured in the UE. For example, the add/modify candidate cell configuration information may be applied to the reference configuration configured in the UE to perform an add or modify operation for a specific candidate cell. Here, the reference configuration may mean the above-described delta configuration.

Further, the controller 1010 may determine whether to perform LTM execution for the UE. For example, the controller 1010 may determine whether to execute the LTM based on the L1/L2 measurement result of the UE. As another example, the controller 1010 may determine whether to execute the LTM of the UE based on whether a preset condition is met and arbitrary information received from the UE.

Further, if the LTM execution of the UE is determined, the transmitter 1020 may transmit control information for the LTM cell switch operation of the UE. The control information may be included in the MAC CE and indicated to the UE. If a MAC CE is received, the MAC entity of the UE may transfer the trigger of the LTM cell switch to the RRC layer in the UE.

When the LTM candidate cell configuration information included in the RRC reconfiguration message includes information indicating the activation state of the secondary cell configured in the UE, upon receiving the MAC CE, the UE may control the activation or deactivation operation of the secondary cell accordingly. For example, if a MAC CE instructing LTM execution is received, the UE may identify the activation state information about the secondary cell according to the LTM candidate cell configuration information and activate or deactivate the secondary cell indicated by the MAC CE. As such, the transmitter 1020 may indicate (e.g., instruct) the initiation of LTM execution to the UE through the MAC CE.

The transmitter 1020 may transfer information indicating the success of the cell switch of the UE to the connected central unit. Alternatively, the transmitter 1020 may transmit information indicating that the UE has initiated the LTM cell switch operation to the connected central unit.

For example, information indicating the success of the cell switch may be transmitted to the central unit through an F1 application protocol (F1AP) message including target cell identification information upon receiving data from the UE indicating successful completion of the LTM cell switch.

As another example, information indicating the initiation of the LTM cell switch may be transmitted to the central unit through an F1 application protocol (F1AP) message including target cell identification information to indicate the initiation of the LTM cell switch procedure for the UE.

Further, the controller 1010 controls the overall operation of the distributed unit 1000 according to performing the L1/L2 signaling-based cell change/switch operation required to perform the above-described embodiments.

The transmitter 1020 and the receiver 1030 are used to transmit or receive signals or messages or data necessary for performing the above-described embodiments, with the UE or the central unit.

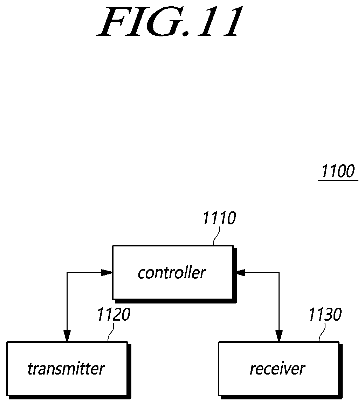

FIG. 11 is a block diagram illustrating a UE according to another embodiment.

Referring to FIG. 11, a UE 1100 performing an L1/L2 triggered mobility (LTM) operation may include a receiver 1130 receiving an RRC reconfiguration message including LTM candidate cell configuration information from a distributed unit (DU) constituting a base station and receiving a MAC control element for an LTM cell switch from the distributed unit, a controller, upon receiving the MAC control element, controlling to notify that the LTM cell switch has been triggered from a MAC layer to an RRC layer, and a transmitter 1120 transmitting, to the distributed unit, data for indicating successful completion for the LTM cell switch according to a result of performing the LTM cell switch operation.

According to an embodiment, the receiver 1130 may receive LTM candidate cell configuration information for configuring the LTM in the UE from the distributed unit. The LTM candidate cell configuration information may be received and included in an information field of the RRC reconfiguration message. For example, the RRC reconfiguration information may include at least one of the reference configuration information stored in the UE and candidate cell configuration information that includes a difference from the reference configuration. As another example, the LTM candidate cell configuration information may include at least one of the complete overall configuration information about the corresponding candidate cell and delta configuration information that includes a difference from the reference configuration.

The reference configuration stored in the UE may be preconfigured through an RRC message. Alternatively, the reference configuration may be transferred to the UE through a message transferred from the base station to the UE, such as system information. The add/modify candidate cell configuration information may be combined with a reference configuration preconfigured in the UE. For example, the add/modify candidate cell configuration information may be applied to the reference configuration configured in the UE to perform an add or modify operation for a specific candidate cell.

Meanwhile, the distributed unit may determine the initiation of the LTM cell switch when a preset condition is met based on arbitrary information received from the UE or an L1/L2 measurement result. If the distributed unit determines the initiation of the LTM cell switch, the receiver 1130 may receive an LTM cell switch instruction from the distributed unit through the MAC CE.

Further, upon receiving a MAC CE, the controller 1110 may perform an LTM cell switching operation. For example, if a MAC CE is received, the MAC entity of the UE may transfer the trigger of the LTM cell switch to the RRC layer in the UE. When the LTM candidate cell configuration information included in the RRC reconfiguration message includes information indicating the activation state of the secondary cell configured in the UE, upon receiving the MAC CE, the controller 1110 may control the activation or deactivation operation of the secondary cell accordingly. For example, upon receiving a MAC CE instructing LTM execution, the controller 1110 may identify the activation state information about the secondary cell according to the LTM candidate cell configuration information and activate or deactivate the secondary cell indicated by the MAC CE.

The transmitter 1120 may perform an LTM cell switching operation and transmit a success indication message for the LTM cell switch to the distributed unit according to the performing result. For example, the transmitter 1120 performs a cell change operation according to the LTM cell switch trigger and, when the cell change is successfully performed, transmits information indicating that the cell switch has succeeded to the distributed unit. For example, the transmitter 1120 may indicate cell change success according to the LTM cell switching operation to the distributed unit through at least one of an HARQ, UCI, UL MAC CE, MSG1, and MSG A in response to the MAC CE. As another example, when the UE fails in the LTM cell switch due to any reason, the transmitter 1120 may transmit information for indicating the same to the distributed unit. For example, the transmitter 1120 may indicate a failure through at least one of HARQ ACK, UCI, UL MAC CE, MSG1, MSG A, and RRC reconfiguration complete message. In this case, cause information about the cause of the failure may be included.

Meanwhile, the distributed unit may transfer information indicating the success of the cell switch of the UE to the connected central unit. Alternatively, the distributed unit may transmit information indicating that the UE has initiated the LTM cell switch operation to the connected central unit. For example, information indicating cell switch success may be transmitted to the central unit through an F1 application protocol (F1AP) message including target cell identification information if receiving uplink data from the UE for indicating the successful completion of the LTM cell switch. As another example, information indicating the initiation of the LTM cell switch may be transmitted to the central unit through an F1 application protocol (F1AP) message including target cell identification information to indicate the initiation of the LTM cell switch procedure for the UE.

Further, the controller 1110 controls the overall operation of the UE 1100 according to performing the L1/L2 signaling-based cell change/switch operation required to perform the above-described embodiments.

The transmitter 1120 and the receiver 1130 are used to transmit or receive signals or messages or data necessary for performing the above-described embodiments, with the distributed unit or the central unit.

The above-described embodiments may be supported by the standard documents disclosed in IEEE 802, 3GPP, and 3GPP2 which are radio access systems. In other words, steps, components, and parts not described to clarify the technical spirit in the embodiments may be supported by the above-described standard documents. Further, all the terms disclosed in the disclosure may be described by the standard documents disclosed above.

The present embodiments described above may be implemented through various means. For example, the present embodiments may be implemented by various means, e.g., hardware, firmware, software, or a combination thereof.

When implemented in hardware, the method according to the present embodiments may be implemented by, e.g., one or more application specific integrated circuits (ASICs), digital signal processors (DSPs), digital signal processing devices (DSPDs), programmable logic devices (PLDs), field programmable gate arrays (FPGAs), processors, controllers, micro-controllers, or micro-processors.

When implemented in firmware or hardware, the method according to the present embodiments may be implemented in the form of a device, procedure, or function performing the above-described functions or operations. The software code may be stored in a memory unit and driven by a processor. The memory unit may be positioned inside or outside the processor to exchange data with the processor by various known means.

The above-described terms, such as "system," "processor," "controller," "component," "module," "interface," "model," or "unit," described above may generally refer to computer-related entity hardware, a combination of hardware and software, software, or software being executed. For example, the above-described components may be, but are not limited to, processes driven by a processor, processors, controllers, control processors, entities, execution threads, programs, and/or computers. For example, both an application being executed by a controller or a processor and the controller or the processor may be the components. One or more components may reside within a process and/or thread of execution, and the components may be positioned in one device (e.g., a system, a computing device, etc.) or distributed in two or more devices.

The above-described embodiments are merely examples, and it will be appreciated by one of ordinary skill in the art various changes may be made thereto without departing from the scope of the present invention. Accordingly, the embodiments set forth herein are provided for illustrative purposes, but not to limit the scope of the present invention, and should be appreciated that the scope of the present invention is not limited by the embodiments. The scope of the disclosure should be construed by the following claims, and all technical spirits within equivalents thereof should be interpreted to belong to the scope of the disclosure.

### CROSS-REFERENCE TO RELATED APPLICATION

The instant patent application claims priority under 35 U.S.C. 119(a) to Korean Patent Application Nos. 10-2022-0137390 and 10-2023-0140086, filed on October 24, 2022 and October 19, 2023, respectively, in the Korean Intellectual Property Office, the disclosures of which are herein incorporated by reference in their entireties. The present patent application claims priority to other applications to be filed in other countries, the disclosures of which are also incorporated by reference herein in their entireties.

## Claims

1. A method for performing an L1/L2 triggered mobility (LTM) operation by a distributed unit (DU) constituting a base station, the method comprising:
transmitting an RRC reconfiguration message including LTM candidate cell configuration information to a UE;
determining LTM execution for the UE;
transmitting a MAC control element for an LTM cell switch to the UE; and
transmitting information indicating initiation of the LTM cell switch or information indicating cell switch success to a central unit (CU) constituting the base station.

2. The method of claim 1, wherein the RRC reconfiguration message includes at least one of reference configuration information stored in the UE and candidate cell configuration information including a difference for the reference configuration.

3. The method of claim 1, wherein a MAC entity of the UE indicates that the LTM cell switch is triggered to an RRC layer if receiving the MAC control element.

4. The method of claim 1, wherein the UE controls activation or deactivation of a secondary cell in the LTM execution when the LTM candidate cell configuration information includes information indicating a secondary cell activation state.

5. The method of claim 1, wherein the information indicating the cell switch success is transmitted through an F1 application protocol (F1AP) message including target cell indication information if receiving data for indicating successful completion for the LTM cell switch from the UE.

6. The method of claim 1, wherein the information indicating the initiation of the LTM cell switch is transmitted through an F1 application protocol (F1AP) message including target cell indication information for indicating initiation of the LTM cell switch procedure for the UE.

7. A method for performing an L1/L2 triggered mobility (LTM) operation by a UE, the method comprising:
receiving an RRC reconfiguration message including LTM candidate cell configuration information from a distributed unit (DU) constituting a base station;
receiving a MAC control element for an LTM cell switch from the distributed unit;
if receiving the MAC control element, controlling to notify that the LTM cell switch has been triggered from a MAC layer to an RRC layer; and
transmitting, to the distributed unit, data for indicating successful completion for the LTM cell switch according to a result of performing the LTM cell switch operation.

8. The method of claim 7, wherein the RRC reconfiguration message includes at least one of reference configuration information stored in the UE and candidate cell configuration information including a difference for the reference configuration.

9. The method of claim 7, wherein the LTM cell switch operation includes controlling activation or deactivation of a secondary cell in the LTM execution when the LTM candidate cell configuration information includes information indicating a secondary cell activation state.

10. The method of claim 7, wherein the distributed unit transmits an F1 application protocol (F1AP) message including target cell indication information to a central unit (CU) constituting the base station if receiving data for indicating successful completion for the LTM cell switch from the UE.

11. A distributed unit (DU) constituting a base station performing an L1/L2 triggered mobility (LTM) operation, comprising:
a transmitter transmitting an RRC reconfiguration message including LTM candidate cell configuration information to a UE; and
a controller determining LTM execution for the UE,
wherein the transmitter transmits a MAC control element for an LTM cell switch to the UE and transmits information indicating initiation of the LTM cell switch or information indicating cell switch success to a central unit (CU) constituting the base station.

12. The distributed unit of claim 11, wherein the RRC reconfiguration message includes at least one of reference configuration information stored in the UE and candidate cell configuration information including a difference for the reference configuration.

13. The distributed unit of claim 11, wherein a MAC entity of the UE indicates that the LTM cell switch is triggered to an RRC layer if receiving the MAC control element.

14. The distributed unit of claim 11, wherein the UE controls activation or deactivation of a secondary cell in the LTM execution when the LTM candidate cell configuration information includes information indicating a secondary cell activation state.

15. The distributed unit of claim 11, wherein the information indicating the cell switch success is transmitted through an F1 application protocol (F1AP) message including target cell indication information if receiving data for indicating successful completion for the LTM cell switch from the UE.

16. The distributed unit of claim 11, wherein the information indicating the initiation of the LTM cell switch is transmitted through an F1 application protocol (F1AP) message including target cell indication information for indicating initiation of the LTM cell switch procedure for the UE.
